# EUROPEAN PATENT APPLICATION

(11) **EP 1 880 870 A1**
(43) Date of publication of application: **23.01.2008**
(21) Application number: 07110331.1
(22) Date of filing: 15.06.2007
(51) Int. Cl.: B60C 1/00, C08K 3/36, C08K 5/37, C08L 9/00, C08L 9/06

(54) **Tire with silica-rich rubber tread for winter performance**

(30) Priority: 19.06.2006 US 455917
(71) Applicant: The Goodyear Tire & Rubber Company, Akron, Ohio 44316-0001 (US)
(72) Inventor: Jacoby, Claude Charles, L-6615 Wasserbillig (LU); Zanzig, David John, Uniontown, OH 44685 (US)
(74) Representative: Kutsch, Bernd

(57) **Abstract**

This invention relates to a tire having a tread intended for winter performance comprising cis 1,4-polybutadiene rubber (BR) and specialized solution polymerization prepared high vinyl styrene/butadiene rubber (HVS-SBR). Such tire tread further comprises a compatible rubber blend of at least 40 phr of the BR in combination the HVS-SBR together with reinforcing filler composed of precipitated silica with a low BET nitrogen surface area and, optionally, rubber reinforcing carbon black. Compatibility of the combination of the BR with a relatively low glass transition temperature (Tg) of -100°C or lower and the HVS-SBR with a relatively high Tg of at least 30°C or higher, and therefore spaced apart Tg's of at least 70°C is promoted by the high vinyl content of the HVS-SBR in a range of from 40 to 50 percent based upon its polybutadiene portion.

## Description

### Field of the Invention

This invention relates to a tire having a tread intended for winter performance comprising cis 1,4-polybutadiene rubber (BR) and specialized solution polymerization prepared high vinyl styrene/butadiene rubber (HVS-SBR). Such tire tread further comprises a compatible rubber blend of at least 40 phr of the BR in combination the HVS-SBR together with reinforcing filler composed of precipitated silica with a low BET nitrogen surface area and, optionally, rubber reinforcing carbon black. Preferably, a disulfide silane based silica coupler is used to aid in coupling the precipitated silica to the elastomers. Compatibility of the combination of the BR with a relatively low glass transition temperature (Tg) of -100°C or lower and the HVS-SBR with a relatively high Tg of at least -30°C or higher, and therefore spaced apart Tg's of at least 70°C is promoted by the high vinyl content of the HVS-SBR in a range of from about 40 to about 50 percent based upon its polybutadiene portion.

### Background of the Invention

Vehicular tires, particularly pneumatic tires, are sometimes provided with a circumferential tread of a rubber composition which contains a combination of styrene/butadiene rubber and cis 1,4-polybutadiene rubber.

For this invention, it is desired to provide such a tire with a tread with suitable wet traction which also has an acceptable performance on snow covered roads. It is difficult to achieve an appropriate balance between wet traction and acceptable performance on snow covered roads for a vehicular tire tread.

A significant aspect of this invention is the preparation of a tire tread of a rubber composition comprising a combination of ingredients in a manner not believed to be heretofore taught, suggested or utilized for a tire tread. The highly reactive mixing procedure involving a chemical reactive combination of precipitated silica with its attendant hydroxyl groups (e.g. silanol groups) and disulfide silane based coupling agent during the mixing process may be a factor.

In particular, it is desired for the tread rubber to comprise a combination of relatively compatible elastomers to promote a relatively low stiffness in a sense of relatively low Shore A hardness in a range of from 55 to 61 and a relatively high tangent delta (tan delta), (-20°C, 1.5 percent strain and 7.8 Hertz) in a range of from 0.65 to 0.80 to promote wet traction for the tire tread.

In order to accomplish such objectives, a relatively high content of at least 40 phr of a high cis 1,4-polybutadiene (BR) having a Tg in a range of from -100°C to -110°C is used in the rubber blend.

However, such relatively high content of such low Tg BR is conventionally relatively incompatible with a styrene butadiene rubber having a significantly higher Tg of at least -20°C.

Accordingly, for the purpose of this invention, a specialized styrene/butadiene rubber (the HVS-SBR) with a relatively high Tg is used having a relatively high vinyl content to promote a significantly high degree of compatibility between the BR and HVS-SBR blend. Such significant degree of compatibility between the BR and HVS-SBR enables the use of the aforesaid relatively high content of the BR in the tread rubber blend.

In this manner, such tire tread comprises a compatible blend of a high cis 1,4-polybutadiene rubber (BR) having a low Tg of at least as low as -100°C together with a specialized high vinyl solution polymerization prepared styrene/butadiene elastomer (HVS-SBR) having a relatively conventional bound styrene content of about 26 percent and a relatively high Tg of -30°C or higher. Therefore, the BR and HVS-SBR have spaced apart Tg's of at least 70°C. As indicated above, it is important to appreciate that a combination of cis 1,4-polybutadiene rubber and styrene/butadiene rubber with such spaced apart Tg's would be expected to be relatively incompatible in a sense of the rubber blend exhibiting separate Tg's of each of the BR and the styrene/butadiene rubber except that the styrene/butadiene rubber (the HVS-SBR) has a relatively high vinyl content to promote a significant degree of compatibility between the BR and HVS-SBR.

The glass transition temperatures (Tg's) for the individual BR and HVS-SBR elastomers is an onset Tg according to ASTM 3418 normally determined by a differential scanning (DSC) calorimeter with a temperature rise of 10°C per minute.

A further significant aspect of the tire tread of this invention is the use of a precipitated silica (synthetic precipitated amorphous silica aggregates) having a relatively low BET nitrogen surface area in combination with the aforesaid BR and HV-SBR elastomers. Such precipitated silica for this invention has a BET nitrogen surface area in a range of from 100 to 135 m²/g instead of a more conventional precipitated silica BET surface area in a range of from 140 to 160 m²/g for most precipitated silica-containing rubber tire treads. Thus, such precipitated silica aggregates for the tread rubber composition, with their relatively low BET surface areas are of a relatively larger particle size which is considered herein to be more useful in this tire tread composition in a sense of an observed balance of physical properties to promote a beneficial balance of wet traction and winter snow performance for the rubber composition for a tire tread.

It has therefore now been discovered that a tire tread can be provided with a circumferential tread of a silica-rich rubber composition which contains a combination of compatible elastomers comprised of a specialized solution polymerization prepared styrene/butadiene copolymer rubber (HVS-SBR) and a cis 1,4-polybutadiene rubber (BR) together with high level (high loading) of a precipitated silica reinforcing filler having a relatively low BET nitrogen surface area.

The use of the precipitated silica reinforcement combined with a disulfide silane based coupling as an aforesaid highly reactive mixture (mixing procedure) thereof together with the said compatible blend of said HVS-SBR/BR aids in achieving suitable wet traction (wet friction between the tread rubber composition and a typical road substrate surface) while maintaining a suitable winter snow performance for the tire tread rubber composition.

In the description of this invention, the terms "rubber" and "elastomer" if used herein, may be used interchangeably, unless otherwise prescribed. The terms "rubber composition", "compounded rubber" and "rubber compound", if used herein, are used interchangeably to refer to "rubber which has been blended or mixed with various ingredients and materials".

The term "phr" where used herein, and according to conventional practice, refers to "parts of a respective material per 100 parts by weight of rubber, or elastomer".

### Summary and Practice of the Invention

In accordance with this invention, a tire is provided having a circumferential tread of a rubber composition which comprises, based on parts by weight per 100 parts by weight of rubber (phr):
(A) 100 phr of elastomers comprising
   (1) 48 to 60 phr of a specialized solution polymerization prepared styrene/butadiene copolymer rubber (HVS-SBR) having an onset Tg (ASTM D3418) in a range of from-28°C to-23°C, a bound styrene content in a range of 23 to 31 percent and a vinyl 1,2-content of from 40 to 50 percent,
   (2) 60 to 40 phr, alternately 52 to 44 phr of cis 1,4-polybutadiene rubber (BR) having an onset Tg (ASTM D3418) in a range of from-107°C to-115°C and a cis 1,4-isometric content in a range of from 93 to 100 percent,
      wherein the weight ratio of said HVS-SBR to said BR preferably is a maximum of 0.5/1 and a minimum of 0.05/1, and, optionally,
   (3) from zero to 20, alternately from 10 to 15, phr of an additional rubber selected from polymers and copolymers of at least one of isoprene and 1,3-butadiene and copolymers of styrene and at least one of isoprene and 1,3-butadiene (other than said HVS-SBR and BR);
(B) 85 to 120, alternately 95 to 110, phr of particulate reinforcing filler comprising:
   (1) 85 to 110, alternately 90 to 105, phr of synthetic amorphous silica (precipitated silica) having a BET surface area in a range of from 100 to 135 m²/g, and
   (2) from zero to 20, alternately 5 to 15, phr of rubber reinforcing carbon black; and
(C) at least one silica coupling agent having a moiety reactive with hydroxyl (e,g, silanol groups) on the surface of the said precipitated silica and on the surface of said silica domains on the surface of said silica-containing carbon black, and an additional moiety interactive with the said rubbers. Said coupling agent is preferably a disulfide silane based coupling agent as, for example, a bis(3-triethoxysilylpropyl) polysulfide containing an average of from 2 to 2.6 connecting sulfur atoms in its polysulfide bridge (referred to herein as a disulfide silane coupling agent even though it most likely contains an average of more than two connecting sulfur atoms in its polysulfidic bridge).

In one aspect, and which may be considered an additional aspect of the invention is for the rubber reinforcing carbon black, if used, to be a high structure rubber reinforcing carbon black. Exemplary of such high structure rubber carbon blacks are rubber reinforcing carbon blacks having a DBP (dibutyl phthalate), (ASTM D2414), value in a range of from 100 to 140 cc/100g in combination with an Iodine value (ASTM D1510) in a range of from 115 to 185 g/kg. Representative examples of such high structure rubber reinforcing carbon blacks are, for example, N110, N115, N120, N121, NN134, N220 and N234 according to their ASTM designations. Representative of various rubber reinforcing carbon blacks can easily be found in The Vanderbilt Rubber Handbook, 1978 edition, Page 417.

As hereinbefore discussed, one aspect of this invention is the tire having a tread of a silica-rich, compatible blend of the said specialized styrene/butadiene rubber (HVS-SBR) and BR rubbers, wherein the ratio of the HVS-SBR to BR is a maximum of 0.5/1 and the minimum ratio is 0.05/1 to achieve suitable wet traction and snow traction properties for a tire tread of such rubber composition.

Such HVS-SBR rubber may be obtained, for example, as SLR4630^{™} from Dow Chemical.

Such BR rubber may be obtained, for example, as Budene1207^{™} from The Goodyear Tire & Rubber Company.

The precipitated silica for use as reinforcement for this invention is intended herein to include precipitated aluminosilicates. Such precipitated silica may be prepared, for example, by controlled acidification of a soluble silicate, e.g., sodium silicate or a combination of silicate and aluminate in the case of aluminosilicates and such silica preparation is, in general, well known to those skilled in the precipitated silica preparation art.

In general, the precipitated silica is a form of aggregates of primary silica particles and have a BET surface area within a range of 80 to 300 m²/g and a DBP (dibutyl phthalate) value within a range of 100 to 350 cc/100g.

A BET method of measuring surface area is described in the Journal of the American Chemical Society, Volume 60, Page 304 (1930).

Various commercially-available precipitated silicas may be considered for use in the tread of this invention such as, for example only and without limitation, silica from Rhodia as Zeosil 1115MP^{™} and from Degussa as Ultrasil VN2^{™}.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silica, and plasticizers, fillers, pigments, fatty acid, zinc oxide, waxes, antioxidants and antiozonants and peptizing agents.

Typical additions of carbon black, silica and silica coupler for this invention are hereinbefore set forth.

In practice, the tire, as a manufactured article, may be prepared by shaping and sulfur curing the assembly of its components at an elevated temperature (e.g. 140°C to about 160°C) and elevated pressure in a suitable mold.

Thus, in a more specific aspect of this invention, a tire is provided having a tread component, namely an outer, circumferential tread intended to be ground-contacting, comprising a rubber composition prepared according to this invention.

Representative of said additional rubbers for use in this invention are conjugated diene-based elastomers which include, for example, cis 1,4-polyisoprene rubber (natural or synthetic), high vinyl polybutadiene having a vinyl 1,2 content in a range of 30 to 90 percent, styrene/butadiene copolymers (SBR), other than said HVS-SBR, including emulsion polymerization prepared SBR and organic solvent polymerization prepared SBR, styrene/isoprene/butadiene terpolymers, isoprene/butadiene copolymers, isoprene/styrene copolymers, acrylonitrile/butadiene copolymers and acrylonitrile/butadiene/styrene terpolymers. For convenience, said acrylonitrile/diene polymers are referred to as diene-based elastomers even though the diene might not be a major component of the elastomer.

Typical amounts of tackifier resins, if used, comprise 0.5 to 10 phr. Typical amounts of processing aids comprise 1 to 50 phr. Such processing aids can include, for example, aromatic, naphthenic, and/or paraffinic processing oils. Typical amounts of antioxidants comprise 1 to 5 phr. Representative antioxidants may be, for example, diphenyl-p-phenylenediamine. Typical amounts of antiozonants comprise 1 to 5 phr. Typical amounts of fatty acids, if used which can include stearic acid, comprise 0.5 to 3 phr. Typical amounts of zinc oxide comprise 1 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur-vulcanizing agent. Examples of suitable sulfur-vulcanizing agents include elemental sulfur (free sulfur) or sulfur donating vulcanizing agents, for example, an amine disulfide, polymeric polysulfide or sulfur olefin adducts. As known to those skilled in the art, sulfur-vulcanizing agents are used in an amount ranging from 0.5 to 4 phr.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from, for example, 1 to 3.5. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients may be mixed in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s).

### EXAMPLE I

Experiments were undertaken to evaluate the feasibility preparing a rubber composition for use as a tire tread composed of a silica-rich rubber composition comprised of a compatible combination of a solution polymerization prepared high vinyl styrene/butadiene rubber (HVS-SBR) and a cis 1,4-polybutadiene rubber (BR).

Rubber composition Samples A through C were prepared, with Sample A being a Comparative Sample and Samples B and C being Experimental Samples.

The rubber composition samples were prepared by mixing the elastomers(s) together with reinforcing fillers and other rubber compounding ingredients in a first non-productive mixing stage (NP) an internal rubber mixer for 5 minutes to a temperature of 160°C. The mixture (optionally) is then further sequentially mixed in a second non-productive mixing stage (NP) in an internal rubber mixer for 4 minutes to a temperature of 160°C. The resulting mixture is then mixed in a productive mixing stage (P) in an internal rubber mixer with curatives for 2 minutes to a temperature of 110°C. The rubber composition is cooled to below 40°C between each of the non-productive mixing steps and between the second non-productive mixing step and the productive mixing step.

Table 1 illustrates the basic formulations for Comparative Sample A and Experimental Samples B and C and Table 2 reports various physical properties of the prepared Comparative Sample A and Experimental Samples B and C.

**Table 1**

| Samples | A | B | C |
|---|---|---|---|
| *Non-Productive Mix Step (160°C)* | | | |
| Solution prepared 50/50 isoprene/butadiene rubber (S-IBR)¹ | 40 | 0 | 0 |
| Solution prepared 30/70 isoprene/butadiene rubber (S-IBR)² | 30 | 0 | 0 |
| Solution prepared styrene/butadiene rubber (HV S-SBR)³ | 0 | 55 | 50 |
| Cis 1,4-polybutadiene rubber⁴ | 30 | 0 | 0 |
| Cis 1,4-polybutadiene rubber⁵ | 0 | 45 | 50 |
| High PCA rubber processing oil⁶ | 44 | 0 | 0 |
| Low PCA rubber processing oil⁷ | 0 | 19.375 | 21.25 |
| Wax⁸ | 1.5 | 1.5 | 1.5 |
| Fatty acid⁹ | 3 | 3 | 3 |
| Silica¹⁰ | 100 | 105 | 105 |
| Silica coupler¹¹ | 12.1 | 13.125 | 13.125 |

| *Productive Mix Step (110°C)* | | | |
|---|---|---|---|
| Sulfur | 1.6 | 1.4 | 1.4 |
| Accelerators¹² | 3.6 | 3.9 | 3.9 |

| | | | |
|---|---|---|---|
| ¹Solution polymerization (pzn) prepared isoprene/butadiene rubber obtained from The Goodyear Tire & Rubber Company having a Tg of -42°C, isoprene content of 50 percent and butadiene content of 50 percent ²Solution polymerization (pzn) prepared isoprene/butadiene rubber obtained from The Goodyear Tire & Rubber Company having a Tg of -83°C, isoprene content of 30 percent and butadiene content of 70 percent ³Solution polymerization prepared styrene/butadiene rubber obtained as SE SLR4630^{™} from the Dow BSL company, as a high vinyl styrene/butadiene copolymer, reportedly having a Tg of -26°C, a bound styrene content of 25 percent and a vinyl 1,2-content (based on total rubber hydrocarbon, or "rhc") of 47 percent. The HVS-SBR elastomer was used as being rubber processing oil extended in the sense of containing 27.3% by weight of TDAE (or, "Treated Distillate Aromatic Extract") rubber processing oil and 55 parts weight HVS-SBR elastomer, reported in Table 1 in terms of parts by weight of the high vinyl styrene/butadiene rubber (HVS-SBR). ⁴Cis 1,4-polybutadiene rubber obtained as Budene 1254 from The Goodyear Tire & Rubber Company as an oil extended elastomer containing 25 parts by weight aromatic rubber processing oil per 100 parts by weight of the elastomer, with the elastomer being reported in Table 2 based on its dry weight (without the oil being taken into consideration). The elastomer has an onset Tg (ASTM D 3418) of 106°C. ⁵Cis 1,4-polybutadiene rubber obtained as Budene 1207 from The Goodyear Tire & Rubber Company having an onset Tg (ASTM D3418) of -110°C ⁶DAE type oil (wherein the term "DAE" means Distillate Aromatic Extract) obtained as Enerflex 65 from the H&R Company ⁷TDAE type oil (wherein the term "TDAE" means Treated Distillate Aromatic Extract) obtained as Vivatec 500 from the H & R Company ⁸Microcrystalline wax ⁹Comprised of stearic, palmitic and oleic acids, primarily stearic acid ¹⁰Precipitated silica obtained as Hi-Sil 315^{™} G-D from PPG Industries ¹¹Silica coupler composite obtained as X266S^{™} from the Degussa Company as a composite of carbon black and bis(3-triethoxysilylpropyl) polysulfide containing an average in a range of from 2.2 to 2.6 connecting sulfur atoms in its polysulfidic bridge in a weight ratio of 50/50 thereof. ¹²Sulfur rubber vulcanization accelerators of the benzothiazole sulfenamide and diphenylguanidine types | | | |

The following Table 2 illustrates cure behavior and various physical properties of the rubber compositions of Samples A through C. Where cured rubber samples are examined, such as for the stress-strain, rebound, hardness, tear strength and abrasion measurements, the rubber samples were cured for 14 minutes at a temperature of 160°C.

**Table 2**

| | Comparative | | |
|---|---|---|---|
| *Rubber Compound (Cpd) Samples* | A | B | C |
| Soln pzn lBR 50/50 | 40 | 0 | 0 |
| Soln pzn IBR 30/70 | 30 | 0 | 0 |
| HVS-SBR (dry, recited here without the oil) | 0 | 55 | 50 |
| Cis 1,4-polybutadiene rubber (dry) | 30 | 45 | 50 |

| *Stress-strain (ATS)*¹ | | | |
|---|---|---|---|
| Tensile strength (MPa) | 14.3 | 16.7 | 16.8 |
| Elongation at break (%) | 501 | 519 | 547 |
| 300% modulus, ring (MPa) | 7.4 | 8.2 | 7.7 |

| *Rebound, Zwick,* 14 *min, 160° C* | | | |
|---|---|---|---|
| -10°C | 18 | 12 | 14 |
| 0°C | 28.4 | 18.4 | 20.6 |
| 23°C | 47.4 | 38.2 | 39.4 |
| 100°C | 64.4 | 59.6 | 59.8 |
| Hardness (Shore A), 23°C² | 56.9 | 59.4 | 58.1 |
| RPA, 100°C, 0.33/3.33 Hertz, storage modulus G', 1% strain (MPa)³ | 1.684 | 2.162 | 2.200 |
| DIN Abrasion, Rel Vol. Loss, cc⁴ | 65 | 75 | 68 |

| *Metravib Instrument, 1.5% strain, 7.8 Hertz* | | | |
|---|---|---|---|
| Storage modulus G' @ -30°C (MPa) | 8.3 | 19.1 | 15.7 |
| Tan delta @ -20°C | 0.539 | 0.772 | 0.703 |

| | | | |
|---|---|---|---|
| ¹Data obtained according to Automated Testing System instrument by the Instron Corporation which incorporates a number of tests in one system. Such instrument may determine, for example, ultimate tensile, ultimate elongation and ring modulus. Data reported in the Table is generated by running the ring tensile test station which is an Instron 4201 load frame. ²Shore A hardness, ASTM D-1415 ³Data obtained according to Rubber Process Analyzer as RPA 2000^{™} instrument by Alpha Technologies, formerly the Flexsys Company and formerly the Monsanto Company. References to an RPA-2000 instrument may be found in the following publications: H.A. Palowski, et al, Rubber World, June 1992 and January 1997, as well as Rubber & Plastics News, April 26 and May 10, 1993 ⁴Data obtained according to DIN 53516 abrasion resistance test procedure using a Zwick drum abrasion unit, Model 6102 with 2.5 Newtons force. DIN standards are German test standards. The DIN abrasion results are reported as relative values to a control rubber composition used by the laboratory. | | | |

From Table 2 it can be seen that both Samples B and C have lower Rebound values at 0°C and -10°C and higher tan delta values at -20°C as compared to comparative Sample A. This is considered herein to be predictive of beneficial wet traction properties for a tire having a tread of Sample B and of Sample C rubber compositions as compared to comparative Sample A.

However, a significantly reduced abrasion loss of 68 cc is seen for Sample C as compared to a value of 75 for Sample B; a higher Tg of about -44 as compared to a value of about 41 for Sample B and a significantly lower storage modulus (G') at 30°C value of about 16 MPa as compared to such G' storage modulus value of about 19 MPa for Sample B. This is considered herein to be predictive of beneficially better winter resistance to treadwear for a tire tread of Sample C as well as predictive of beneficially better winter performance for a tire tread of Sample C, as compared to a tire tread of Sample B.

### Brief Description of the Drawings

FIGURE 1 is presented to graphically illustrate Storage Modulus (G') values as a function of temperature for Samples A through C.
FIGURE 2 is presented to graphically illustrate tan delta values as a function of temperature for Samples A through C.

### Detailed Description of the Drawings.

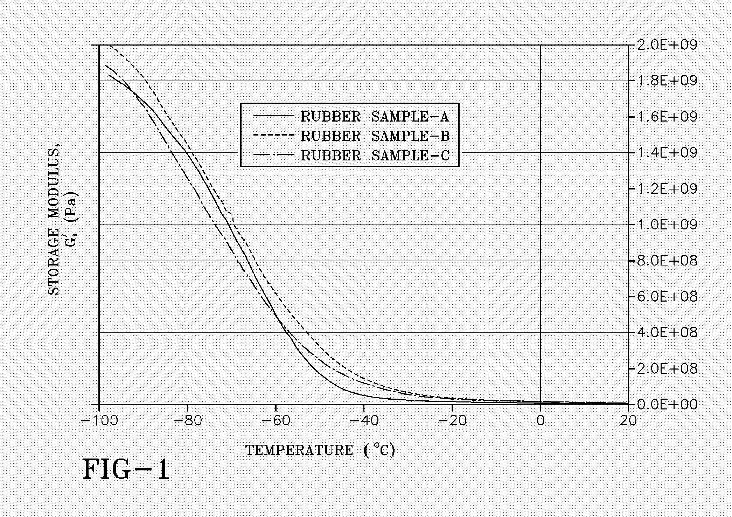

For FIG 1, a graphical presentation of Storage Modulus G' versus Temperature, it is readily seen that the modulus increase at low temperature is higher (steeper curve) for Experimental Sample B but is lower (less steep curve) for Comparative Sample A.

This is considered herein to be significant in the sense of tire performance under winter conditions (e.g. snow and ice) being slightly worse for Experimental Sample B but better for Experimental Sample C.

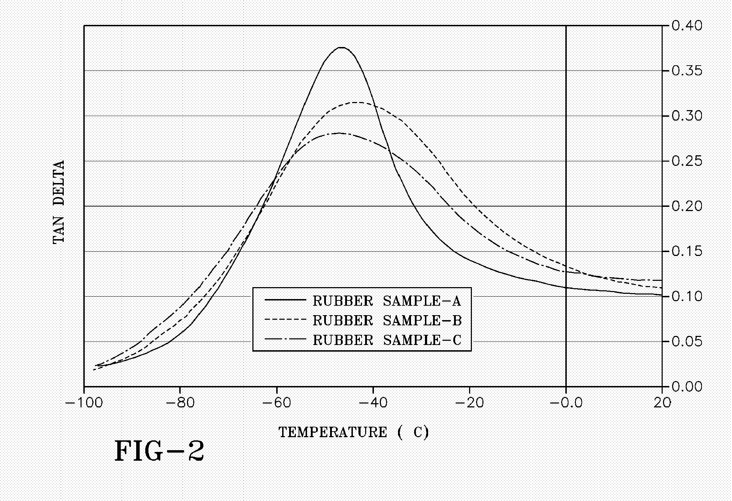

For FIG 2, a graphical presentation of tan delta versus Temperature, it is readily seen that the tan delta peak (maximum temperature) is similar for Comparative Sample A and Experimental Sample C but slightly higher for Experimental Sample B.

This is considered herein to be significant for tire performance in the sense that it is indicative of similar winter performance for Comparative Sample A and Experimental Sample C, but slightly inferior winter performance for Experimental Sample B, for a tire having a tread of the respective rubber compositions.

Further, it can be seen that the tan delta at lower temperatures, namely from-95°C to-70°C, is relatively high for Experimental Samples B and C versus Comparative Sample A which is indicative of a relatively good resistance to tread wear potential for Experimental Samples B and C.

Further, it can be seen that the tan delta values at the higher temperatures, namely from-30°C to 0°C, is relatively high for Experimental Samples B and C versus Comparative Sample A which is indicative of good wet performance (e.g. traction) for a tire having a tread of the respective rubber compositions.

Therefore, it is considered herein that an improved balance of wet traction and winter performance is provided for a tire having a tread of the Experimental Sample C rubber composition.

### EXAMPLE II

A tires are individually prepared with a circumferential tread of the rubber composition of experimental Sample B and experimental Sample C and identified herein as Tire B and Tire C, respectively.

The tires were individually tested for wet traction and winter handling, the results of which are reported herein in Table 3, with the properties for Tire B being normalized to a value of 100 and the properties for Tire C reported on a comparison basis to normalized values for the Control Tire B.

**Table 3**

| Property | Tire B | Tire C |
|---|---|---|
| Wet traction | 100 | 100 |
| Snow handling | 100 | 106 |

From Table 3 it can be seen that while experimental Tire C exhibited wet traction similar to experimental Tire B, experimental Tire C exhibited significantly better snow handling than Tire B.

## Claims

1. A tire having a circumferential tread of a rubber composition comprising, based on parts by weight per 100 parts by weight of rubber (phr):
(A) 100 phr of elastomers comprising
(1) from 48 to 60 phr of a specialized solution polymerization prepared styrene/butadiene copolymer rubber (HVS-SBR) having an onset Tg (ASTM D3418) in a range of from -28°C to -23°C, a bound styrene content in a range of 23 to 31 percent and a vinyl 1,2-content of from 40 to 50 percent,
(2) from 60 to 40 phr of cis 1,4-polybutadiene rubber (BR) having an onset Tg (ASTMD 3418) in a range of from -100°C to -110°C and a cis 1,4-isometric content in a range of from 93 to 100 percent, and, optionally,
(3) from zero to 20 phr of an additional rubber selected from polymers and copolymers of at least one of isoprene and 1,3-butadiene
and copolymers of styrene and at least one of isoprene and 1,3-butadiene.
(B) from 85 to 120 phr of particulate reinforcing filler comprising:
(1) from 85 to 110 phr of synthetic amorphous precipitated silica having a BET surface area in a range of from 100 to 135 m²/g, and
(2) from zero to 20 phr of rubber reinforcing carbon black; and
(C) at least one silica coupling agent having a moiety reactive with hydroxyl groups on the surface of the said precipitated silica and an additional moiety interactive with the said rubbers.

2. The tire of claim 1 wherein said coupling agent is a
bis(3-triethoxysilylpropyl) polysulfide containing an average of from 2 to 2.6 connecting sulfur atoms in its polysulfide bridge.

3. The tire of claim 1 or 2 wherein said rubber reinforcing carbon black is a high structure rubber reinforcing carbon black DBP value in a range of from 100 to 140 cc/100g in combination with an Iodine value in a range of from 115 to 185 g/kg.

4. The tire of at least one of the previous claims, wherein said precipitated silica is in a form of aggregates of primary silica particles and has a BET surface area within a range of 80 to 300 m²/g and a DBP value within a range of 100 to 350 cc/100g.

5. The tire of one of the previous claims, wherein said additional rubbers are conjugated diene-based elastomers selected from at least one of cis 1,4-polyisoprene rubber, high vinyl polybutadiene having a vinyl 1,2 content in a range of 30 to 90 percent, styrene/butadiene copolymers (SBR) other than said HVS-SBR, styrene/isoprene/butadiene terpolymers, isoprene/butadiene copolymers, isoprene/styrene copolymers, acrylonitrile/butadiene copolymers and acrylonitrile/butadiene/styrene terpolymers.
